# EUROPEAN PATENT APPLICATION

(11) **EP 4 672 016 A1**
(43) Date of publication of application: **31.12.2025**
(21) Application number: 24769620.6
(22) Date of filing: 04.01.2024
(51) Int. Cl.: G06F 16/21, G06F 16/22, G06F 16/27

(54) **DATA STORAGE METHOD, APPARATUS AND COMPUTING DEVICE**

(30) Priority: 16.03.2023 CN 202310266217
(71) Applicant: Huawei Cloud Computing Technologies Co., Ltd., Guiyang, Guizhou 550025 (CN)
(72) Inventor: FU, Xudong, Guiyang, Guizhou 550025 (CN); PENG, Lixun, Guiyang, Guizhou 550025 (CN); LV, Jinquan, Guiyang, Guizhou 550025 (CN); REN, Bo, Guiyang, Guizhou 550025 (CN)
(74) Representative: Goddar, Heinz J.
(86) International application number: PCT/CN2024/070488
(87) International publication number: WO 2024/187922

(57) **Abstract**

A data storage method and apparatus, and a computing device are provided. The method includes: in a process in which the first node processes a plurality of access requests, locally storing or caching hot data in the first node, migrating cold data to a cloud storage service, and locally storing or caching metadata of the cold data in the first node, where the cloud storage service is a service deployed by a cloud computing platform in a cloud computing resource, the cloud computing platform deploys a cloud database system in the cloud computing resource managed by the cloud computing platform, the first node is a primary database node or a secondary database node of the cloud database system, the hot data and the cold data are different data tables of the database or different table partitions of the data table, and the hot data and the cold data are determined based on either or both of a quantity of times and a data amount of accessing a table partition of a data table. According to the method, data storage costs can be reduced without affecting performance.

## Description

This application claims priority to Chinese Patent Application No. 202310266217.6, filed on March 16, 2023 and entitled "DATA STORAGE METHOD AND APPARATUS, AND COMPUTING DEVICE", which is incorporated herein by reference in its entirety.

### TECHNICAL FIELD

This application relates to the field of cloud computing, and more specifically, to a data storage method and apparatus, and a computing device.

### BACKGROUND

During use of a database, a large amount of data is written and updated every day. However, only data that is close in time, such as within a month or even a week, is frequently updated and accessed usually. Data that is frequently accessed is referred to as hot data, and data that is not frequently accessed is referred to as cold data (such as historical orders of e-commerce, historical transaction records of banking systems, and time series data). However, in a production environment, high-performance storage is usually used to meet a write performance requirement. Therefore, costs are high. The data is also stored in a high-performance storage medium in the production environment, resulting in high storage costs.

In addition, to ensure high availability and reliability, most database systems generally use a deployment manner of one primary node and multiple standby nodes (the primary and standby nodes are usually homogeneous), and data has a plurality of consistent backups in a plurality of computing nodes, to ensure that after the primary node is faulty, the standby node can take over and restore a service. Consequently, storage costs are further increased. In addition, due to one primary node and multiple standby nodes, the standby nodes are in an idle state in most cases, resulting in a waste of a large quantity of computing resources.

Therefore, how to reduce storage costs and overheads without affecting performance becomes an urgent technical problem to be resolved.

### SUMMARY

This application provides a data storage method and apparatus, and a computing device. The method can reduce data storage costs without affecting performance.

According to a first aspect, a data storage method is provided. A cloud database system includes a primary database node and one or more secondary database nodes, a cloud computing platform deploys the cloud database system in a cloud computing resource managed by the cloud computing platform, and the cloud computing platform deploys a cloud storage service in the cloud computing resource. The method includes: A first node receives a plurality of access requests for accessing a database, where the first node is the primary database node or a secondary database node of the cloud database system; in a process in which the first node processes the plurality of access requests, locally stores or caches hot data in the first node; and in the process in which the first node processes the plurality of access requests, migrates cold data to the cloud storage service, and locally stores or caches metadata of the cold data in the first node, where the hot data and the cold data are different data tables in the database, or the hot data and the cold data are different table partitions of the data table; and the hot data and the cold data are determined based on either or both of a quantity of times and a data amount of accessing a table partition of a data table; or the hot data and the cold data are determined based on either or both of a quantity of times and a data amount of accessing the data table.

In the foregoing technical solution, the hot data and the cold data are determined based on either or both of the quantity of times and the data amount of accessing the table partition of the data table, the cold data is migrated to the cloud storage service, the metadata of the cold data is locally stored or cached in the first node, and the metadata is used to access the cold data in the cloud storage service. In this way, the cold data is migrated to the cloud storage service to reduce data storage costs, and the metadata of the cold data is locally stored or cached in the first node, so that even if the cold data is migrated to the cloud storage service, the first node can also access the cold data in the cloud storage service based on the metadata that is of the cold data and that is locally stored or cached in the first node, and subsequent access performance is not affected.

With reference to the first aspect, in some implementations of the first aspect, the method further includes: in the process in which the first node processes the plurality of access requests, migrating warm data to the cloud storage service, and locally storing or caching metadata of the warm data in the first node. The hot data, the warm data, and the cold data are different data tables in the database, or the hot data, the warm data, and the cold data are different table partitions of the data table. The hot data, the warm data, and the cold data are determined based on either or both of a quantity of times and a data amount of accessing a table partition of a data table; or the hot data, the warm data, and the cold data are determined based on either or both of a quantity of times and a data amount of accessing the data table.

With reference to the first aspect, in some implementations of the first aspect, the first node is the primary database node of the cloud database system. The method further includes: in the process in which the first node processes the plurality of access requests, migrating the warm data to the cloud storage service, and locally storing or caching the warm data in the first node, where metadata of the warm data is locally stored by the one or more secondary database nodes included in the cloud database system.

With reference to the first aspect, in some implementations of the first aspect, the method further includes: The first node maintains a first table, where the first table is used to record storage statuses of the hot data, the cold data, and the warm data.

With reference to the first aspect, in some implementations of the first aspect, the plurality of access requests include a write request, and the write request includes to-be-written data. The method further includes: The first node performs, based on the write request, a write operation on the cold data stored in the cloud storage service, and caches the to-be-written data in local storage of the first node in a form of incremental data.

With reference to the first aspect, in some implementations of the first aspect, the plurality of access requests include a write request, and the write request includes to-be-written data. The method further includes: The first node performs, based on the write request, a write operation on the warm data stored in the cloud storage service, and caches the to-be-written data in local storage of the first node in a form of incremental data.

With reference to the first aspect, in some implementations of the first aspect, the method further includes: The first node combines the incremental data in the local storage of the first node with the cold data or the warm data stored in the cloud storage service, and migrates combined data to the cloud storage service.

With reference to the first aspect, in some implementations of the first aspect, the first table is further used to record existence of the incremental data.

According to a second aspect, a data storage apparatus is provided. A cloud database system includes a primary database node and one or more secondary database nodes, a cloud computing platform deploys the cloud database system in a cloud computing resource managed by the cloud computing platform, the cloud computing platform deploys a cloud storage service in the cloud computing resource, the apparatus is used in a first node, and the first node is the primary database node or a secondary database node of the cloud database system. The apparatus includes: a receiving module, a cache module, and a migration module. The receiving module is configured to receive a plurality of access requests for accessing a database, where the first node is the primary database node or a secondary database node of the cloud database system. The cache module is configured to: in a process of processing the plurality of access requests, locally store or cache hot data in the first node. The migration module is configured to: in the process of processing the plurality of access requests, migrate cold data to the cloud storage service, and locally store or cache metadata of the cold data in the first node. The hot data and the cold data are different data tables in the database, or the hot data and the cold data are different table partitions of the data table. The hot data, and the cold data are determined based on either or both of a quantity of times and a data amount of accessing a table partition of a data table; or the hot data, and the cold data are determined based on either or both of a quantity of times and a data amount of accessing the data table.

With reference to the second aspect, in some implementations of the second aspect, the migration module is further configured to: in the process of processing the plurality of access requests, migrate warm data to the cloud storage service, and locally store or cache metadata of the warm data in the first node. The hot data, the warm data, and the cold data are different data tables in the database, or the hot data, the warm data, and the cold data are different table partitions of the data table. The hot data, the warm data, and the cold data are determined based on either or both of a quantity of times and a data amount of accessing a table partition of a data table; or the hot data, the warm data, and the cold data are determined based on either or both of a quantity of times and a data amount of accessing the data table.

With reference to the second aspect, in some implementations of the second aspect, the first node is the primary database node of the cloud database system; and the migration module is further configured to: in the process of processing the plurality of access requests, migrate warm data to the cloud storage service, and locally store or cache the warm data in the first node, where metadata of the warm data is locally stored by the one or more secondary database nodes included in the cloud database system.

With reference to the second aspect, in some implementations of the second aspect, the apparatus further includes: a maintenance module, configured to maintain a first table, where the first table is used to record storage statuses of the hot data, the cold data, and the warm data.

With reference to the second aspect, in some implementations of the second aspect, the plurality of access requests include a write request, and the write request includes to-be-written data. The cache module is further configured to: perform, based on the write request, a write operation on the cold data stored in the cloud storage service, and cache the to-be-written data in local storage of the first node in a form of incremental data.

With reference to the second aspect, in some implementations of the second aspect, the plurality of access requests include a write request, the write request includes to-be-written data. The cache module is further configured to: cache, based on that the write request is a write operation performed on the cold data stored in the cloud storage service, the to-be-written data in local storage of the first node in a form of incremental data.

With reference to the second aspect, in some implementations of the second aspect, the apparatus further includes: a combination module, configured to combine the incremental data in the local storage of the first node with the cold data or the warm data stored in the cloud storage service. The migration module is further configured to migrate combined data to the cloud storage service.

With reference to the second aspect, in some implementations of the second aspect, the first table is further used to record existence of the incremental data.

According to a third aspect, a computing device is provided, including a processor and a storage, and optionally, further including an input/output interface. The processor is configured to control the input/output interface to send and receive information, the storage is configured to store a computer program, and the processor is configured to invoke the computer program from the storage and run the computer program, to perform the method according to any one of the first aspect or the possible implementations of the first aspect.

Optionally, the processor may be a general-purpose processor, and may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the storage. The storage may be integrated into the processor, or may be located outside the processor and exist independently.

According to a fourth aspect, a computing device cluster is provided, including at least one computing device. Each computing device includes a processor and a storage. The processor of the at least one computing device is configured to execute instructions stored in the storage of the at least one computing device, to enable the computing device cluster to perform the method according to any one of the first aspect or the possible implementations of the first aspect.

According to a fifth aspect, a chip is provided. The chip obtains instructions and executes the instructions to implement the method according to any one of the first aspect or the implementations of the first aspect.

Optionally, in an implementation, the chip includes a processor and a data interface. The processor reads, through the data interface, instructions stored in a storage, to perform the method according to any one of the first aspect or the implementations of the first aspect, or perform the method according to any one of the second aspect and the possible implementations of the second aspect.

Optionally, in an implementation, the chip may further include a storage. The storage stores instructions. The processor is configured to execute the instructions stored in the storage. When the instructions are executed, the processor is configured to perform the method according to any one of the first aspect and the implementations of the first aspect, or the processor is configured to perform the method according to any one of the second aspect and the possible implementations of the second aspect.

According to a sixth aspect, a computer program product including instructions is provided. When the instructions are run by a computing device, the computing device is enabled to perform the method according to any one of the first aspect or the implementations of the first aspect.

According to a seventh aspect, a computer program product including instructions is provided. When the instructions are run by a computing device cluster, the computing device cluster is enabled to perform the method according to any one of the first aspect or the implementations of the first aspect.

According to an eighth aspect, a computer-readable storage medium is provided, including computer program instructions. When the computer program instructions are executed by a computing device, the computing device performs the method according to any one of the first aspect or the implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a nonvolatile storage medium.

According to a ninth aspect, a computer-readable storage medium is provided, including computer program instructions. When the computer program instructions are executed by a computing device cluster, the computing device cluster performs the method according to any one of the first aspect or the implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a nonvolatile storage medium.

### BRIEF DESCRIPTION OF DRAWINGS

FIG. 1 is a block diagram of a cloud scenario to which an embodiment of this application is applicable;
FIG. 2 is a schematic flowchart of a data storage method according to an embodiment of this application;
FIG. 3 is a diagram of classifying cold data, warm data, and hot data in a database according to an embodiment of this application;
FIG. 4 is a block diagram of a storage status before data migration in a database system according to an embodiment of this application;
FIG. 5 is a block diagram of data storage after data migration according to a migration strategy according to an embodiment of this application;
FIG. 6 is another block diagram of data storage after data migration according to a migration strategy according to an embodiment of this application;
FIG. 7 is a diagram of processing logic for a read/write conflict according to an embodiment of this application;
FIG. 8 is a block diagram of a data storage apparatus 800 according to an embodiment of this application;
FIG. 9 is a diagram of an architecture of a computing device 1500 according to an embodiment of this application;
FIG. 10 is a diagram of an architecture of a computing device cluster according to an embodiment of this application; and
FIG. 11 is a diagram of a connection between computing devices 1500A and 1500B through a network according to an embodiment of this application.

### DESCRIPTION OF EMBODIMENTS

The following describes technical solutions of this application with reference to accompanying drawings.

Each aspect, embodiment, or feature is presented in this application with reference to a system including a plurality of devices, assemblies, modules, and the like. It should be appreciated and understood that, each system may include another device, assembly, module, and the like, and/or may not include all devices, assemblies, modules, and the like discussed with reference to the accompanying drawings. In addition, a combination of these solutions may be alternatively used.

In addition, in embodiments of this application, terms such as "example" or "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "relevant (corresponding, relevant)" and "corresponding (corresponding)" may be interchangeably used sometimes. It should be noted that meanings to be expressed by the two are consistent when a difference between them is not emphasized.

A service scenario described in embodiments of this application is intended to describe the technical solutions in embodiments of this application more clearly, and does not constitute a limitation on the technical solutions provided in embodiments of this application. A person of ordinary skill in the art may learn that, with evolution of network architectures and emergence of new service scenarios, the technical solutions provided in embodiments of this application are also applicable to a similar technical problem.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and variants thereof all mean "include but are not limited to", unless otherwise specifically emphasized in another manner.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

During use of a database, a large amount of data is written and updated every day. However, only data that is close in time, such as within a month or even a week, is frequently updated and accessed usually. Data that is frequently accessed is referred to as hot data, and data that is not frequently accessed is referred to as cold data (such as historical orders of e-commerce, historical transaction records of banking systems, and time series data). However, in a production environment, high-performance storage is usually used to meet a write performance requirement. Therefore, costs are high. The data is also stored in a high-performance storage medium in the production environment, resulting in high storage costs.

In addition, to ensure high availability and reliability, most database systems generally use a deployment manner of one primary node and multiple standby nodes (the primary and standby nodes are usually homogeneous), and data has a plurality of consistent backups in a plurality of computing nodes, to ensure that after the primary node is faulty, the standby node can take over and restore a service. Consequently, storage costs are further increased. In addition, due to one primary node and multiple standby nodes, the standby nodes are in an idle state in most cases, resulting in a waste of a large quantity of computing resources.

Therefore, currently, both online and offline database systems increase operation costs to some extent to achieve high availability and reliability.

In view of this, embodiments of this application provide a data storage method, to reduce storage costs and overheads without affecting performance.

In a possible implementation, the data storage method provided in this embodiment of this application may be applied to a cloud service scenario, and a cloud management platform in the cloud service scenario performs the data storage method. For example, the cloud database system includes a primary database node and one or more secondary database nodes. The cloud computing platform deploys the cloud database system in a cloud computing resource managed by the cloud computing platform, and the cloud computing platform deploys a cloud storage service in the cloud computing resource.

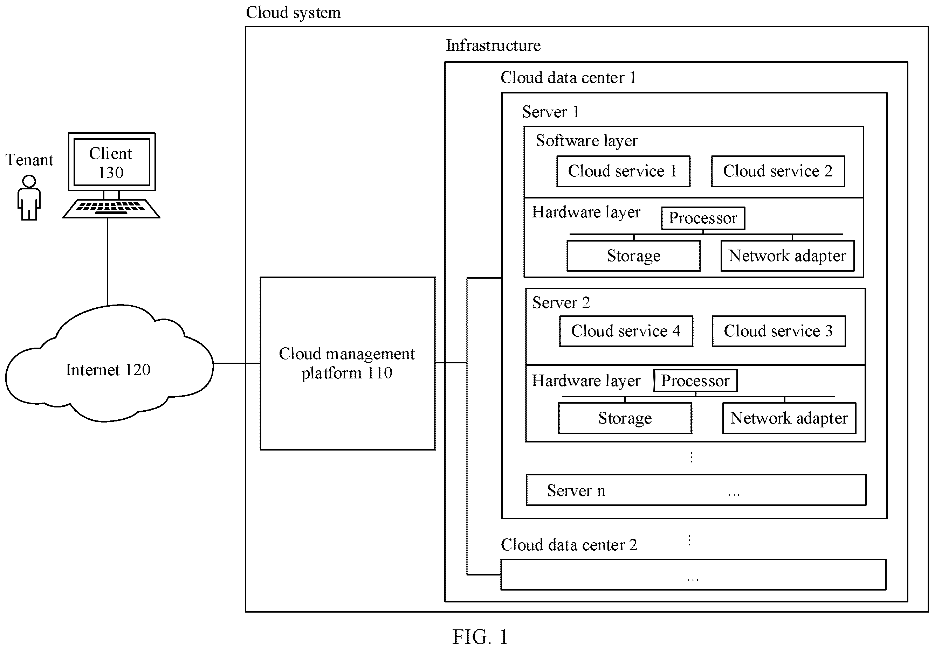

For ease of description, the following first describes the cloud service scenario in detail with reference to FIG. 1.

FIG. 1 is a block diagram of a cloud scenario to which an embodiment of this application is applicable. As shown in FIG. 1, the cloud scenario may include a cloud management platform 110, an Internet 120, and a client 130.

As shown in FIG. 1, the cloud management platform 110 is configured to manage an infrastructure that provides a plurality of cloud services. The infrastructure includes a plurality of cloud data centers, each cloud data center includes a plurality of servers, and each server includes a cloud service resource to provide a corresponding cloud service for a tenant.

The cloud management platform 110 may be located in the cloud data center, and may provide an access interface (for example, an interface or an application programming interface (application programming interface, API)). The tenant may operate the client 130 to remotely access the access interface, to register a cloud account and a password on the cloud management platform 110 and log in to the cloud management platform 110. After the cloud management platform 110 successfully authenticates the cloud account and the password, the tenant may further pay on the cloud management platform 110 to select and purchase a virtual machine with a specific specification (a processor, a memory, or a disk). After the payment for purchase succeeds, the cloud management platform 110 provides a remote login account and password of the purchased virtual machine, and the client 130 may remotely log in to the virtual machine, and install and run an application of the tenant in the virtual machine. Therefore, the tenant may create, manage, log in to, and operate the virtual machine in the cloud data center by using the cloud management platform 110. The virtual machine may also be referred to as a cloud server (elastic compute service, ECS) or an elastic instance (different cloud service providers have different names).

It should be understood that the tenant of the cloud service may be an individual, an enterprise, a school, a hospital, an administrative agency, or the like.

Functions of the cloud management platform 110 include but are not limited to a user console, a computing management service, a network management service, a storage management service, an authentication service, and an image management service. The user console provides an interface or an API to interact with the tenant. The computing management service is used to manage servers running a virtual machine and a container and a bare metal server. The network management service is used to manage network services (such as a gateway and a firewall). The storage management service is used to manage storage services (such as a data bucket service). The authentication service is used to manage a tenant account and password. The image management service is used to manage a virtual machine image. The tenant may use the client 130 to log in to the cloud management platform 110 through the Internet 120 to manage a rented cloud service.

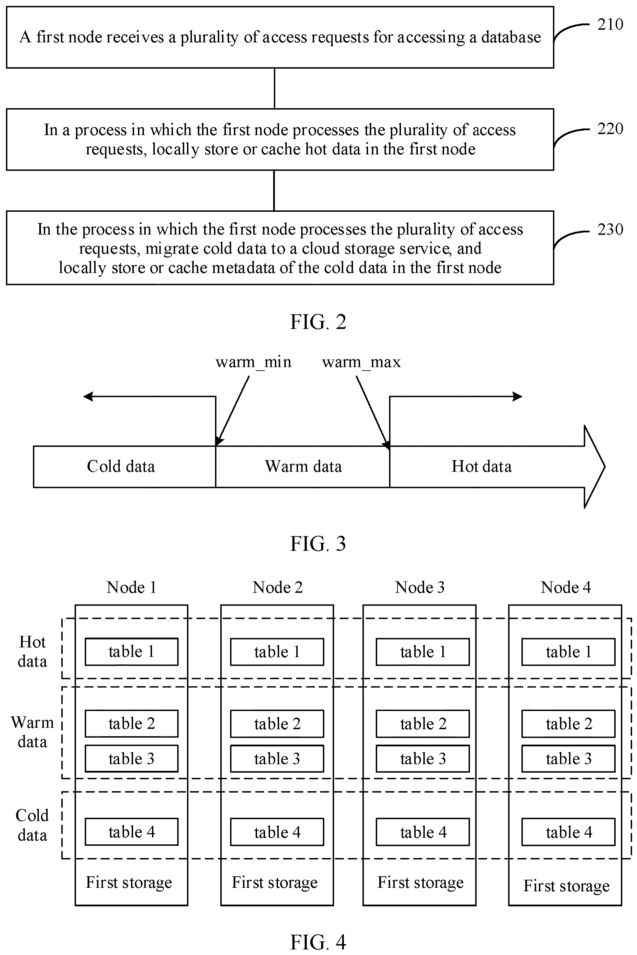

FIG. 2 is a schematic flowchart of a data storage method according to an embodiment of this application. As shown in FIG. 2, the method may include steps 210 to 230. The following separately describes steps 210 to 230 in detail.

Step 210: A first node receives a plurality of access requests for accessing a database.

For example, the first node may be a primary database node or a secondary database node of a cloud database system. This is not limited in embodiments of this application. The first node receives the plurality of access requests for accessing the database.

Step 220: In a process in which the first node processes the plurality of access requests, locally store or cache hot data in the first node.

For example, the hot data may be different data tables in the database, or may be different table partitions of the data table in the database. This is not specifically limited in embodiments of this application.

For example, the hot data may be determined based on either or both of a quantity of times and a data amount of accessing a table partition of a data table or the hot data may be determined based on either or both of a quantity of times and a data amount of accessing the data table. This is not specifically limited in embodiments of this application. With reference to an example in FIG. 3, the following describes in detail how to determine the hot data based on the quantity of times and the data amount of accessing the data table or the table partition of the data table. Details are not described herein.

For example, in this embodiment of this application, a TieredMeta component may be added to the database system, and the TieredMeta component is configured to calculate a quantity of access times and/or an access amount of data in the database in a periodicity.

It should be understood that the TieredMeta component may be deployed in any node or process that can access an execution status and a transaction execution status of a database, or may be independently deployed as a proxy (Proxy), to implement periodically table-level access statistics, transaction execution statistics, and the like. This is not specifically limited in embodiments of this application.

In this embodiment of this application, for the hot data, the hot data is frequently accessed online data, and has a high requirement on storage performance and a high requirement on data access. Therefore, the first node may locally store or cache the hot data in the first node, to ensure an access requirement.

For example, the local storage of the first node may include but is not limited to a solid state drive (solid state drive, SSD), a high-performance cloud disk, a persistent memory, and a nonvolatile memory express (nonvolatile memory express, NVMe). This is not specifically limited in this embodiment.

Step 230: In the process in which the first node processes the plurality of access requests, migrate cold data to a cloud storage service, and locally store or cache metadata of the cold data in the first node.

For example, the cold data may be different data tables in the database, or may be different table partitions of the data table in the database. This is not specifically limited in embodiments of this application.

For example, the cold data may be determined based on either or both of a quantity of times and a data amount of accessing a table partition of a data table, or may be determined based on either or both of a quantity of times and a data amount of accessing the data table. This is not specifically limited in embodiments of this application. With reference to the example in FIG. 3, the following describes in detail how to determine the cold data based on the quantity of times and the data amount of accessing the data table or the table partition of the data table. Details are not described herein.

In this embodiment of this application, for the cold data, because the cold data is infrequently accessed offline data, for example, backup and archived data, the cold data has a low requirement on storage performance and a low requirement on data access. Therefore, the first node may migrate the cold data to the cloud storage service, and locally store or cache the metadata of the cold data in the first node. In this way, storage costs can be reduced. In addition, even if the cold data is migrated to the cloud storage service, the first node can access the cold data in the cloud storage service based on the metadata that is of the cold data and that is locally stored or cached, and subsequent access performance is not affected.

In a possible implementation, the metadata that is of the cold data and that is locally stored or cached in the first node may include but is not limited to pointing information such as an address and a size of the cold data stored in the cloud storage service.

In the foregoing technical solution, the hot data and the cold data are determined based on either or both of the quantity of times and the data amount of accessing the table partition of the data table, the cold data is migrated to the cloud storage service, the metadata of the cold data is locally stored or cached in the first node, and the metadata is used to access the cold data in the cloud storage service. In this way, because costs of local storage of a database node are high; the cold data is migrated to the cloud storage service to reduce data storage costs; and the metadata of the cold data is locally stored or cached in the first node, so that even if the cold data is migrated to the cloud storage service, the first node can also access the cold data in the cloud storage service based on the metadata that is of the cold data and that is locally stored or cached in the first node, and subsequent access performance is not affected.

Optionally, in some embodiments, the method further includes: in the process in which the first node processes the plurality of access requests, migrating warm data to the cloud storage service, and locally storing or caching metadata of the warm data.

For example, the hot data, the warm data, and the cold data are different data tables in the database, or the hot data, the warm data, and the cold data are different table partitions of the data table.

For example, the hot data, the warm data, and the cold data are determined based on either or both of a quantity of times and a data amount of accessing a table partition of a data table; or the hot data, the warm data, and the cold data are determined based on either or both of a quantity of times and a data amount of accessing the data table. This is not specifically limited in embodiments of this application.

In this embodiment of this application, for the warm data, because a probability of accessing the warm data is still lower than that of accessing the hot data, the warm data may also be migrated to the cloud storage service, and the metadata of the warm data is locally stored or cached in the first node. In this way, storage costs can be reduced. In addition, even if the warm data is migrated to the cloud storage service, the first node can access the warm data in the cloud storage service based on the metadata that is of the warm data and that is locally stored or cached, and subsequent access performance is not affected.

Optionally, in some embodiments, if the first node is the primary database node of the cloud database system, the cloud database system further includes one or more secondary database nodes. In this embodiment of this application, in the process in which the first node processes the plurality of access requests, the warm data may be migrated to the cloud storage service, and the warm data is locally stored or cached in the first node, the metadata of the warm data is locally stored by the one or more secondary database nodes included in the cloud database system, or the warm data is locally stored by some of the one or more secondary database nodes, and the metadata of the warm data is locally stored by the other of the one or more secondary database nodes. In this way, because an access amount of the warm data is larger than that of the cold data, the warm data is cached in local storage of the primary database node, so that write performance of the primary database node can be ensured; and because costs of local storage of the node in the database are high, a quantity of replicas of the warm data is reduced on the secondary node of the database, so that storage costs can be further reduced.

For example, the following lists a method for determining cold data, warm data, or hot data based on either or both of a quantity of times and a data amount of accessing a data table or a table partition of a data table according to an embodiment of this application.

For example, as shown in FIG. 3, (warm_min, warm_max) is an interval of a quantity of times of accessing the warm data and/or a data access amount. warm_min is a smallest value of the quantity of times of accessing the warm data and/or the data access amount, and warm_max is a largest value of the quantity of times of accessing the warm data and/or the data access amount.

Cold data: If a quantity of access times and/or an access amount of data in a database in a periodicity is less than warm_min, the data in the database may be defined as cold data.

Warm data: If a quantity of access times and/or an access amount of a piece of data in a database in a periodicity is greater than warm_min but less than warm_max, the data in the database may be defined as warm data.

Hot data: If a quantity of access times and/or an access amount of a piece of data in a database in a periodicity is greater than warm_max, the data in the database may be defined as hot data.

FIG. 4 is a block diagram of a storage status before data migration in a database system according to an embodiment of this application.

It should be understood that a quantity of nodes in the database system is not specifically limited in embodiments of this application, and may include only a primary node, or may include a primary node and at least one standby node. In FIG. 4, one primary node and three standby nodes are used as an example for description.

As shown in FIG. 4, the database system includes one primary node (a node 1) and three standby nodes (which may also be referred to as secondary nodes, which are a node 2, a node 3, and a node 4). Table 1, Table 2, Table 3, and Table 4 are data tables stored in a database. Before data migration, Table 1, Table 2, Table 3, and Table 4 are stored in local storage of the primary node (the node 1), and data is synchronized to the three standby nodes (the node 2, the node 3, and the node 4) through asynchronous remote replication or other methods. In other words, Table 1, Table 2, Table 3, and Table 4 are respectively stored in local storage of the node 1 to the node 4.

Because local storage costs of the node 1 to the node 4 are high, cold data, warm data and hot data in Table 1 to Table 4 may be determined based on a quantity of access times of Table 1, Table 2, Table 3, and Table 4 and/or an amount of accessed data that are/is calculated in a periodicity, and data is migrated to a storage (for example, a cloud storage service) with low storage costs for storage based on a corresponding migration strategy, to reduce data storage costs and overheads.

In an example, in this embodiment of this application, a quantity of table-level data access times and/or access traffic are calculated, based on a time window, on Table 1 to Table 4 stored in the database system in FIG. 4. In a possible implementation, FIG. 3 is used as an example. It is assumed that a quantity of access times and/or access traffic of Table 1 is greater than warm_max. In this case, Table 1 is hot data. It is assumed that a quantity of access times and/or access traffic of Table 2 and Table 3 are/is greater than warm_min but less than warm_max. In this case, Table 2 and Table 3 are warm data. It is assumed that a quantity of access times and/or an access amount of Table 4 are/is less than warm_min. In this case, Table 4 is cold data.

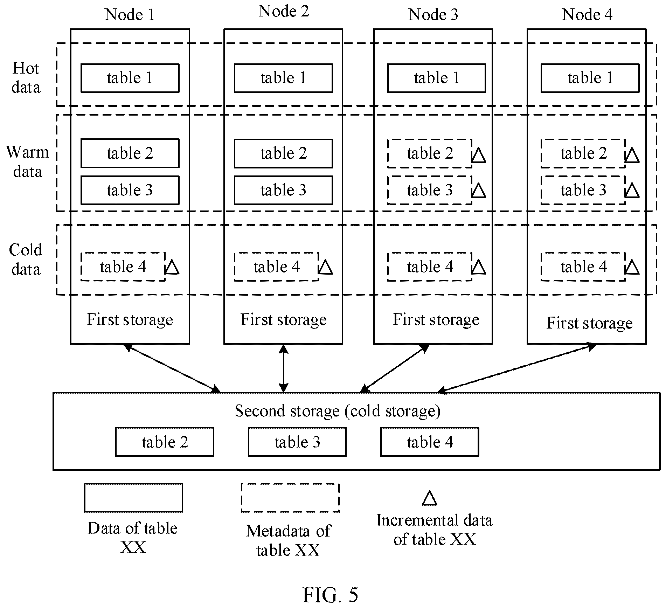

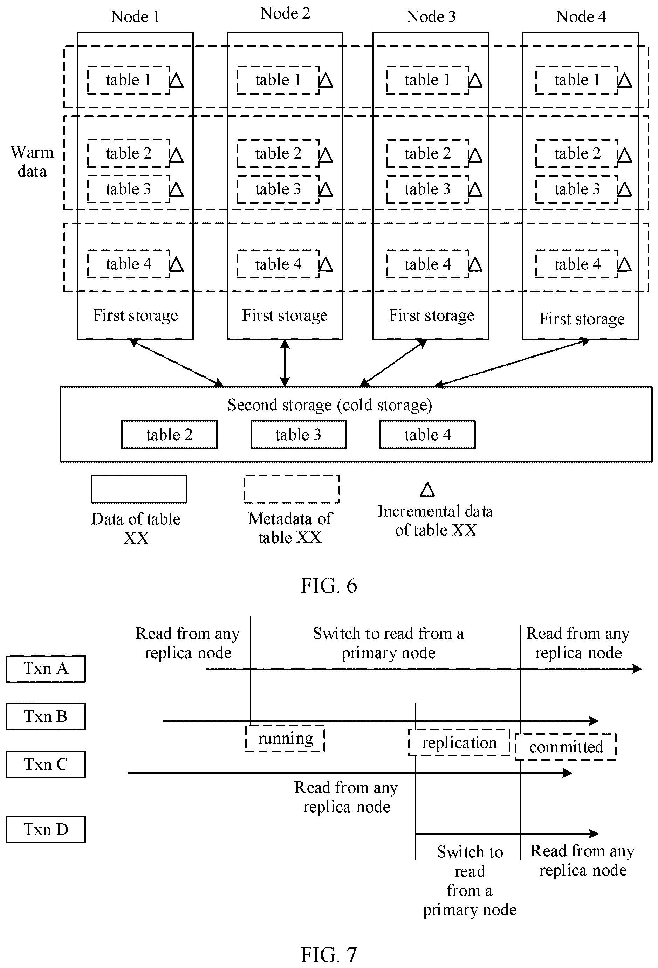

With reference to FIG. 5 and FIG. 6, the following describes in detail, by using an example in which Table 1 is hot data, Table 2 and Table 3 are warm data, and Table 4 is cold data, a data storage status after data migration is performed according to a migration strategy provided in this embodiment of this application. It should be understood that the examples in FIG. 5 and FIG. 6 are merely intended to help a person skilled in the art understand embodiments of this application, but are not intended to limit embodiments of this application to specific values or specific scenarios in the examples in FIG. 5 and FIG. 6. It is clear that a person skilled in the art can make various equivalent modifications or changes based on the following example provided in FIG. 5 and FIG. 6, and such modifications and changes also fall within the scope of embodiments of this application.

FIG. 5 is a block diagram of data storage after data migration according to a migration strategy according to an embodiment of this application.

For example, the following describes in detail a possible migration strategy corresponding to each of the cold data, the warm data, and the hot data.

### 1. Migration strategy corresponding to hot data (strategy 1)

The migration strategy corresponding to the hot data is that the hot data is not migrated, and the hot data is still persisted in local storage (a first storage). In other words, the hot data is not migrated to a second storage (corresponding to the foregoing cloud storage service, which may also be referred to as cold storage) for storage.

For example, as shown in FIG. 5, because Table 1 is hot data, all data entities of Table 1 are stored in local storage (the first storage) of the node 1 to the node 4, and no data entity of Table 1 is stored in the second storage (the cold storage).

### 2. Migration strategy corresponding to cold data (strategy 2)

For the cold data, the cold data may be migrated to the second storage (the cold storage) for storage, and only metadata corresponding to the cold data is retained in the local storage. The metadata points to the cold data stored in the cold storage. The metadata may also be referred to as pointing information of the cold data stored in the cold storage. The pointing information may include, for example, but is not limited to, pointing information such as a size and an address of the cold data stored in the cold storage. In this way, it is ensured that, when a service is connected to the node, a normal read access capability can still be provided; or when another node is faulty, and the node can normally participate in election to ensure that the node takes over a corresponding service.

For example, as shown in FIG. 5, because Table 4 is cold data, Table 4 is migrated to the second storage (the cold storage) for storage, and only metadata of Table 4 is stored in the local storage (the first storage) of the node 1 to the node 4. In this way, any one node of the node 1 to the node 4 may read and access stored Table 4 from the second storage (the cold storage) based on the metadata of the Table 4 that is locally stored in the node.

### 3. Migration strategy corresponding to warm data (strategy 3)

For the warm data, all the warm data may be migrated to the second storage (the cold storage) for storage in a cold data processing manner. Because an access frequency or an access amount of the warm data is large, a data entity of the warm data is stored in the primary node 1, and data stored in local storage (in the first storage) of the three standby nodes (which are the node 2, the node 3, and the node 4) may be determined based on the following different implementations.

In a possible implementation, in a hot data processing manner, the local storage (in the first storage) of the three standby nodes (which are the node 2, the node 3, and the node 4) each may store a data entity of warm data.

In another possible implementation, in a cold data processing manner, local storage (in the first storage) of the three standby nodes (which are the node 2, the node 3, and the node 4) each may store metadata of the warm data, and the metadata points to the warm data stored in the cold storage.

In another possible implementation, higher popularity of the warm data indicates a larger quantity of data replicas retained by the standby node. As the popularity of the warm data decreases, a quantity of replicas is gradually reduced according to a specific rule, to reduce costs.

For example, as shown in FIG. 5, because Table 2 and Table 3 are warm data, Table 2 and Table 3 are migrated to the second storage (the cold storage) for storage, and data entities of Table 2 and Table 3 are stored in the local storage (the first storage) of the node 1. According to the foregoing implementation, a quantity of replicas of Table 2 and Table 3 on the standby node is reduced from 3 to 1, that is, the data entities of Table 2 and Table 3 are stored in local storage of only one standby node (for example, the node 2), metadata of Table 2 and Table 3 is stored in local storage of other standby nodes (such as the node 3 and the node 4), and the metadata points to Table 2 and Table 3 stored in the second storage (the cold storage). In this way, any one of the remaining standby nodes may read and access the stored Table 2 and Table 3 from the second storage (cold storage) based on the metadata of Table 2 and Table 3 that is locally stored in the node. For example, the data entities of Table 2 and Table 3 are stored in local storage (the first storage) of the node 3, and metadata of Table 2 and Table 3 is stored in local storage (the first storage) of the node 2 to the node 4.

It should be noted that quantities of replicas of Table 2 and Table 3 on the standby node may be the same or may be different. This is not specifically limited in embodiments of this application.

FIG. 6 is another block diagram of data storage after data migration according to a migration strategy according to an embodiment of this application.

For example, in this embodiment of this application, for any one of the cold data, the warm data, or the hot data, the data entity may be periodically migrated to the second storage (cold storage) for storage, and metadata of the data is stored in local storage (the first storage) of the node 1 to the node 4. In this way, storage costs can be minimized.

As shown in FIG. 6, Table 1 to Table 4 are all migrated from the local storage (the first storage) of the node 1 to the node 4 to the second storage (the cold storage) for storage, and the local storage (the first storage) of the node 1 to the node 4 stores metadata of Table 1 to Table 4. The metadata of Table 1 to Table 4 points to the data entities of Table 1 to Table 4 stored in the cold storage.

Optionally, in some embodiments, resource load of each node in the cluster may be further periodically collected, so that during data migration, a node with lighter load preferentially performs data migration, to implement load balancing. For example, the resource load of the node may include but is not limited to memory load, central processing unit (center processing unit, CPU) load, network load, and the like of the node.

Optionally, in some embodiments, the data entity may be preferentially retained on a node with lighter load, to implement load balancing.

In this embodiment of this application, after the data is migrated based on the foregoing migration strategy, current storage distribution of each piece of data may be further recorded. For example, FIG. 5 is used as an example. The table map shown in the table 1 shows distribution of Table 1 to Table 4 on all nodes in the cluster, that is, a quantity of nodes and nodes that hold data of Table 1 to Table 4.

As shown in the table 1, db_name represents a database name, Table_name represents a table name, node_count represents a quantity of nodes that hold the data, node_x represents an identifier of a node that holds the data, and deltatbl represents incremental data. If node_count is 0, the data is stored in the cold storage and can be accessed through any node. Otherwise, if node_count is not 0, node_count indicates a quantity of nodes that hold the data after the record. For example, Table 1 stores a data entity locally (a first storage device) on each of the node 2, the node 3, and the node 4. Therefore, a value of node_count corresponding to Table 1 is 3. Table 2 and Table 3 each store a data entity locally (the first storage device) only on the node 3. Therefore, a value of node _count corresponding to Table 2 and Table 3 is 1, and a node that holds the data is the node 3. Table 4 is stored only in the cold storage, and no data entity is stored locally (the first storage device) on the node 1 to the node 4. Therefore, a value of node _count corresponding to Table 4 is 0.

**Table 1 table map**

| db_name | Table_name | node_count | | | | |
|---|---|---|---|---|---|---|
| db1 | Table 1 | 3 | Node 2 | Node 3 | Node 4 | |
| db1 | Table 2 | 1 | Node 3 | | | deltatbl |
| db1 | Table 3 | 1 | Node 3 | | | deltatbl |
| db1 | Table 4 | 0 | | | | deltatbl |

It should be understood that, after data is migrated to the cold storage, most cold storage supports only append write. To continue to provide a write service, when a write operation such as insertion, update, or deletion is performed on cold data (a table or a partition), incremental data may be recorded locally, deltatbl in the table 1 indicates that incremental data exists in Table 2 to Table 4.

It should be noted that deltatbl in the foregoing table stores a table name, a log file, a file path, or related information of another type of file of the incremental data. This is not specifically limited in embodiments of this application.

In this embodiment of this application, newly written data generated after migration is organized in a form of incremental data, and an organization form of the incremental data may include but is not limited to various formats such as a subtable, a log, and another open-source persistence structure. The main purpose is to resolve the problem that write operations cannot be modified after data is migrated to cold storage. Therefore, incremental data is recorded to provide continuous write capabilities.

Optionally, when the data stored in the cold storage is accessed, the data stored in the cold storage and the local incremental data may be queried at the same time. Therefore, when a query plan is generated, if it is found that the table in the TableMap has corresponding incremental data, the generated query plan needs to scan the incremental data together and combine the incremental data with the data stored in the cold storage. In addition, the incremental data and the data in the cold storage have duplicate data, but the incremental data needs to be the latest data. Therefore, only a record of the incremental data needs to be retained in a query result. In addition, if only recently generated or modified data is accessed, because the data is stored in the local incremental data, there is no performance loss, because the performance loss is mainly generated when historical data is accessed to ensure that full historical data is read.

Optionally, in some embodiments, after running for long enough time, a large amount of local incremental data may be accumulated. To prevent a large amount of incremental data from occupying a local storage resource of a node, for example, in FIG. 6, because hot data is stored in the cold storage, the hot data has a large amount of write access, and a large amount of incremental data is generated in local storage of the node. In this case, in this embodiment of this application, the incremental data and corresponding data in the cold storage may be combined periodically or when a system is idle, to reduce the incremental data in the local storage.

The foregoing combination manner is not specifically limited in embodiments of this application. In an example, the data corresponding to the incremental data may be read from the cold storage, and the data and the incremental data are combined and are then stored in the cold storage. In another example, the incremental data may be directly stored in the cold storage, and the incremental data and the data corresponding to the incremental data are combined in the cold storage.

It should be understood that the foregoing combination operation may be automatically performed when the system is idle, or may be manually performed when there is no service. This is not limited in this application.

In this embodiment of this application, because only a primary node is writable, after a transaction on the primary node is submitted, data further needs to be synchronized to a replica node through asynchronous remote replication or another means, and the asynchronous remote replication causes a case in which consistency between nodes cannot be ensured in real time. In this way, an objective herein is to record information about a transaction that is currently not submitted, or a transaction that has been submitted and started replication but has not been replicated to all nodes, as a basis for determining visibility to ensure a transaction isolation level. Therefore, in this embodiment of this application, a distributed global active transaction record is further added, and a transaction that is currently not submitted or a transaction that has been submitted but has not been replicated to all replicas according to a consensus protocol is stored in the record. When a node receiving a read request conflicts with a transaction in the global active transaction record, the request is forwarded to the primary node for execution. Therefore, it can be ensured that a read/write transaction isolation level of each node is not affected.

In an example, the TieredMeta component may be further responsible for recording information about a transaction that is currently not submitted or a transaction that is submitted but has not reached consistency among all nodes. For example, Writing_Tables of the table 2 records an example of a table or a partition that has been written or is being written, but has not been replicated to all replicas that are recorded in TableMap and that have completed replay. Only the primary node can perform write operations, and only read operations can be specified on the standby node. Therefore, writing_tables needs to be collected only on the primary node.

**Table 2 writing_tables**

| | | |
|---|---|---|
| Txn 1 | tbl 1 | running |
| Txn 2 | tbl 2 | committing |
| Txn 3 | tbl 3 | replication |

The transaction 1 (Txn 1) in the table 2 is used as an example. When the transaction 1 (Txn 1) performs a write operation on the table 1, a corresponding record is inserted into the writing tables, and an initial state is running. After the transaction Txn 1 is submitted, the transaction Txn 1 enters a replication state. After all nodes that hold the table are replicated and replayed successfully, the record is then deleted after the transaction is set to be in a committed state.

Optionally, in some embodiments, in this embodiment of this application, the foregoing writing_tables may be further used to implement processing logic of a read/write conflict, to ensure an isolation level of each transaction when a plurality of transactions are concurrently executed.

For example, FIG. 7 shows processing logic of a read/write conflict. Txn B is a write transaction executed on the primary node, and running marked below Txn B is a running status of Txn B. Txn A, Txn C, and Txn D are three read transactions that are concurrently executed. Txn A is a read transaction started later than Txn B, Txn C is a read transaction started earlier than Txn B, and Txn D is a read transaction started after Txn B is submitted and remote replication is started. A dashed line interval on each transaction line indicates conflict processing logic of a concurrent read transaction of the transaction in a corresponding interval, that is, in a transaction status interval of Txn B, processing manners of read transactions started at different time are as follows: reading from any standby node or switching to read from the primary node.

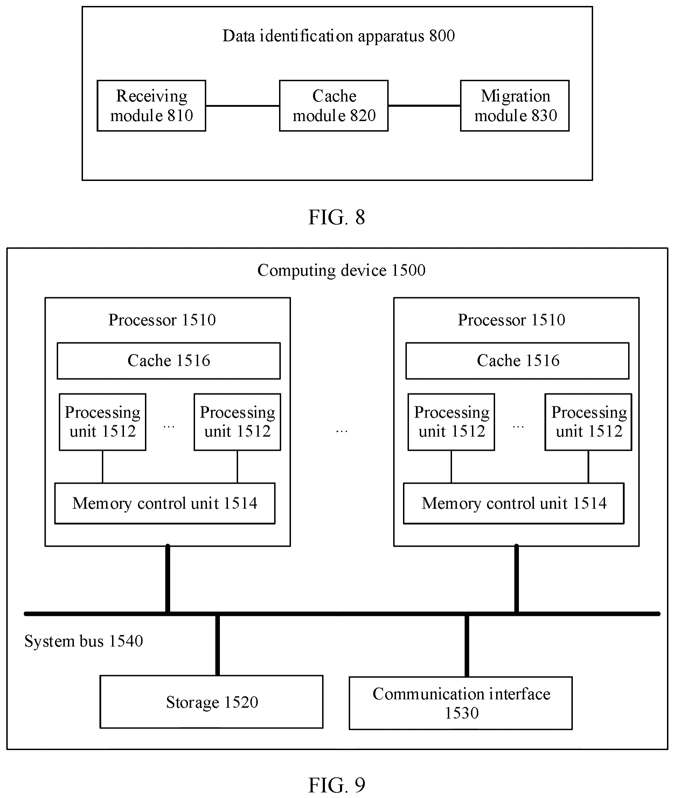

The foregoing describes in detail the method provided in embodiments of this application with reference to FIG. 1 to FIG. 7. The following describes in detail apparatus embodiments in this application with reference to FIG. 8 to FIG. 11. It should be understood that, descriptions of the method embodiments correspond to descriptions of the apparatus embodiments. Therefore, for a part not described in detail, refer to the foregoing method embodiments.

FIG. 8 is a block diagram of a data storage apparatus 800 according to an embodiment of this application. The apparatus 800 may be implemented by using software, hardware, or a combination of software and hardware. The apparatus 800 provided in this embodiment of this application may implement a method procedure shown in embodiments of this application. The apparatus 800 may be used in a first node. The first node is a primary database node or a secondary database node of a cloud database system. A cloud computing platform deploys the cloud database system in a cloud computing resource managed by the cloud computing platform, the cloud database system includes the primary database node and one or more secondary database nodes, and the cloud computing platform deploys a cloud storage service in the cloud computing resource. The apparatus 800 includes: a receiving module 810, a cache module 820, and a migration module 830. The receiving module 810 is configured to receive a plurality of access requests for accessing a database, where the first node is the primary database node or a secondary database node of the cloud database system. The cache module 820 is configured to: in a process of processing the plurality of access requests, locally store or cache hot data in the first node. The migration module 830 is configured to: in the process of processing the plurality of access requests, migrate cold data to the cloud storage service, and locally store or cache metadata of the cold data in the first node. The hot data and the cold data are different data tables in the database, or the hot data and the cold data are different table partitions of the data table. The hot data, and the cold data are determined based on either or both of a quantity of times and a data amount of accessing a table partition of a data table; or the hot data, and the cold data are determined based on either or both of a quantity of times and a data amount of accessing the data table.

Optionally, the migration module 830 is further configured to: in the process of processing the plurality of access requests, migrate warm data to the cloud storage service, and locally store or cache metadata of the warm data in the first node. The hot data, the warm data, and the cold data are different data tables in the database, or the hot data, the warm data, and the cold data are different table partitions of the data table. The hot data, the warm data, and the cold data are determined based on either or both of a quantity of times and a data amount of accessing a table partition of a data table; or the hot data, the warm data, and the cold data are determined based on either or both of a quantity of times and a data amount of accessing the data table.

Optionally, the first node is the primary database node of the cloud database system. The migration module 830 is further configured to: in the process of processing the plurality of access requests, migrate warm data to the cloud storage service, and locally store or cache the warm data in the first node, where metadata of the warm data is locally stored by the one or more secondary database nodes included in the cloud database system.

Optionally, the apparatus 800 further includes a maintenance module, configured to maintain a first table, where the first table is used to record storage statuses of the hot data, the cold data, and the warm data.

Optionally, the plurality of access requests include a write request, the write request includes to-be-written data. The cache module is further configured to: perform, based on the write request, a write operation on the cold data stored in the cloud storage service, and cache the to-be-written data in local storage of the first node in a form of incremental data.

Optionally, the plurality of access requests include a write request, the write request includes to-be-written data. The cache module 820 is further configured to: cache, based on that the write request is a write operation performed on the cold data stored in the cloud storage service, the to-be-written data in local storage of the first node in a form of incremental data.

Optionally, the apparatus 800 further includes: a combination module, configured to combine the incremental data in the local storage of the first node with the cold data or the warm data stored in the cloud storage service. The migration module is further configured to migrate combined data to the cloud storage service.

Optionally, the first table is further used to record existence of the incremental data.

The apparatus 800 herein may be embodied in a form of functional module. The term "module" herein may be implemented in a form of software and/or hardware, and this is not specifically limited.

For example, the "module" may be a software program, a hardware circuit, or a combination thereof that implements the foregoing functions. For example, the following uses the receiving module 810 as an example to describe an implementation of the receiving module 810. Similarly, for implementations of other modules such as the cache module 820 and the migration module 830, refer to the implementation of the receiving module 810.

The receiving module 810 is used as an example of a software functional unit, and the receiving module 810 may include code run on a computing instance. The computing instance may include at least one of a physical host (a computing device), a virtual machine, and a container. Further, there may be one or more computing instances. For example, the receiving module 810 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. A communication gateway needs to be set in each VPC for communication between two VPCs in a same region or between VPCs in different regions. Interconnection between VPCs is implemented through the communication gateway.

The receiving module 810 is used as an example of a hardware functional unit, and the receiving module 810 may include at least one computing device, for example, a server. Alternatively, the receiving module 810 may be a device implemented by using an application-specific integrated circuit (application-specific integrated circuit, ASIC) or a programmable logic device (programmable logic device, PLD), or the like. The PLD may be a complex program logic device (complex programmable logic device, CPLD), a field-programmable gate array (field-programmable gate array, FPGA), a generic array logic (generic array logic, GAL), or any combination thereof.

A plurality of computing devices included in the receiving module 810 may be distributed in a same region, or may be distributed in different regions. The plurality of computing devices included in the receiving module 810 may be distributed in a same AZ, or may be distributed in different AZs. Similarly, the plurality of computing devices included in the receiving module 810 may be distributed in a same VPC, or may be distributed in a plurality of VPCs. The plurality of computing devices may be any combination of computing devices such as a server, an ASIC, a PLD, a CPLD, an FPGA, and GAL.

Therefore, modules in the examples described in embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It should be noted that when the apparatus provided in the foregoing embodiment performs the foregoing method, division into the foregoing functional modules is merely used as an example for description. During actual application, the foregoing functions may be allocated as required to different functional modules for implementation, that is, an internal structure of the apparatus is divided into different functional modules to implement all or some of the functions described above. For example, the receiving module 810 may be configured to perform any step in the foregoing method, the cache module 820 may be configured to perform any step in the foregoing method, and the migration module 830 may be configured to perform any step in the foregoing method. Steps that the receiving module 810, the cache module 820, and the migration module 830 are responsible for implementing may be specified as required, and the receiving module 810, the cache module 820, and the migration module 830 respectively implement different steps in the foregoing method to implement all functions of the foregoing apparatus.

In addition, the apparatus embodiments and the method embodiments provided in the foregoing embodiments belong to a same concept. For specific implementation processes thereof, refer to the method embodiments. Details are not described herein again.

The method provided in embodiments of this application may be performed by a computing device, and the computing device may also be referred to as a computer system. The computing device may include a hardware layer, an operating system layer running above the hardware layer, and an application layer running above the operating system layer. The hardware layer includes hardware, for example, a processing unit, a memory, and a memory control unit. Subsequently, functions and structures of the hardware are described in detail. The operating system is any one or more computer operating systems through a process (process), for example, a Linux operating system, a Unix operating system, an Android operating system, an iOS operating system, or a Windows operating system, that implement service processing. The application layer includes applications such as a browser, an address book, word processing software, and instant messaging software. In addition, optionally, the computer system is a handheld device, for example, a smartphone, or a terminal device, for example, a personal computer. This is not particularly limited in this application, provided that the method according to embodiments of this application can be implemented. The method provided in embodiments of this application may be performed by the computing device or a functional module that is in the computing device and that can invoke and execute a program.

The following describes in detail with reference to FIG. 9, a computing device provided in an embodiment of this application.

FIG. 9 is a diagram of an architecture of a computing device 1500 according to an embodiment of this application. The computing device 1500 may be a server, a computer, or another device with a computing capability. The computing device 1500 shown in FIG. 9 includes at least one processor 1510 and a storage 1520.

It should be understood that quantities of processors and storages in the computing device 1500 are not limited in this application.

The processor 1510 executes instructions in the storage 1520, so that the computing device 1500 implements the method provided in this application. Alternatively, the processor 1510 executes the instructions in the storage 1520, so that the computing device 1500 implements the functional modules provided in this application, to implement the method provided in this application.

Optionally, the computing device 1500 further includes a communication interface 1530. The communication interface 1530 uses a transceiver module, for example but not limited to, a network interface card or a transceiver, to implement communication between the computing device 1500 and another device or a communication network.

Optionally, the computing device 1500 further includes a system bus 1540. The processor 1510, the storage 1520, and the communication interface 1530 are separately connected to the system bus 1540. The processor 1510 can access the storage 1520 through the system bus 1540. For example, the processor 1510 can read and write data or execute code in the storage 1520 through the system bus 1540. The system bus 1540 is a peripheral component interconnect express (peripheral component interconnect express, PCI) bus, an extended industry standard architecture (extended industry standard architecture, EISA) bus, or the like. The system bus 1540 is classified into an address bus, a data bus, a control bus, or the like. For ease of representation, only one thick line is used to represent the bus in FIG. 9, but this does not mean that there is only one bus or only one type of bus.

In a possible implementation, the processor 1510 mainly functions to interpret instructions (or code) of a computer program and process data in computer software. The instructions of the computer program and the data in the computer software may be stored in the storage 1520 or a cache 1516.

Optionally, the processor 1510 may be an integrated circuit chip and has a signal processing capability. By way of example, and not limitation, the processor 1510 is a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware assembly. The general-purpose processor is a microprocessor or the like. For example, the processor 1510 is a central processing unit (central processing unit, CPU).

Optionally, each processor 1510 includes at least one processing unit 1512 and a memory control unit 1514.

Optionally, the processing unit 1512 is also referred to as a core (core) or a kernel, and is a most important component of the processor. The processing unit 1512 is made of monocrystalline silicon through a specific production process. All computation, accept commands, storage commands, and data processing of the processor are executed by the core. The processing unit independently runs program instructions, and increases a running speed of a program by using a parallel computing capability. Various processing units have fixed logical structures. For example, the processing unit includes logical units such as a level 1 cache, a level 2 cache, an execution unit, an instruction level unit, and a bus interface.

In an implementation example, the memory control unit 1514 is configured to control data exchange between the storage 1520 and the processing unit 1512. Specifically, the memory control unit 1514 receives a memory access request from the processing unit 1512, and controls access to the memory based on the memory access request. By way of example, and not limitation, the memory control unit is a device, for example, a memory management unit (memory management unit, MMU).

In an implementation example, each memory control unit 1514 performs addressing for the storage 1520 through the system bus. In addition, an arbiter (not shown in FIG. 9) is configured in the system bus, and the arbiter is responsible for processing and coordinating contention-based access of a plurality of processing units 1512.

In an implementation example, the processing unit 1512 and the memory control unit 1514 are communicatively connected through a connection line like an address line inside a chip, to implement communication between the processing unit 1512 and the memory control unit 1514.

Optionally, each processor 1510 further includes a cache 1516, and the cache is a data exchange buffer (referred to as a cache). When the processing unit 1512 needs to read data, the processing unit 1512 first searches the cache for required data. If the required data is found, the processing unit 1512 directly reads the data. If the required data is not found, the processing unit 1512 searches the storage for the required data. Because the cache runs much faster than the storage, a function of the cache is to help the processing unit 1512 run faster.

The storage 1520 can provide running space for a process in the computing device 1500. For example, the storage 1520 stores a computer program (specifically, code of the program) used to generate the process. After the computer program is run by the processor to generate the process, the processor allocates corresponding storage space to the process in the storage 1520. Further, the storage space further includes a text segment, an initial data segment, an uninitialized data segment, a stack segment, a heap segment, and the like. The storage 1520 stores, in the storage space corresponding to the process, data generated during running of the process, for example, intermediate data or process data.

Optionally, the storage is also referred to as a memory, and is configured to temporarily store operation data in the processor 1510 and data exchanged with an external storage, for example, a hard disk. Provided that the computer runs, the processor 1510 schedules, to the memory for an operation, data on which the operation needs to be performed, and the processing unit 1512 sends a result after the operation is completed.

By way of example, and not limitation, the storage 1520 is a volatile memory or a nonvolatile memory, or may include both a volatile memory and a nonvolatile memory. The nonvolatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM), and is used as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the storage 1520 in the system and method described in this specification is intended to include but is not limited to these storages and any storage of another proper type.

The listed structure of the computing device 1500 is merely an example for description, and this application is not limited thereto. The computing device 1500 in this embodiment of this application includes various types of hardware in a computer system in the conventional technology. For example, the computing device 1500 further includes a storage other than the storage 1520, for example, a magnetic disk storage. A person skilled in the art should understand that the computing device 1500 may further include another component required for implementing normal running. In addition, a person skilled in the art should understand that, based on a specific requirement, the computing device 1500 may further include a hardware device implementing another additional function. Moreover, a person skilled in the art should understand that the computing device 1500 may alternatively include only a component required for implementing embodiments of this application, and do not necessarily include all the components shown in FIG. 9.

An embodiment of this application further provides a computing device cluster. The computing device cluster includes at least one computing device. The computing device may be a server. In some embodiments, the computing device may alternatively be a terminal device, for example, a desktop computer, a notebook computer, or a smartphone.

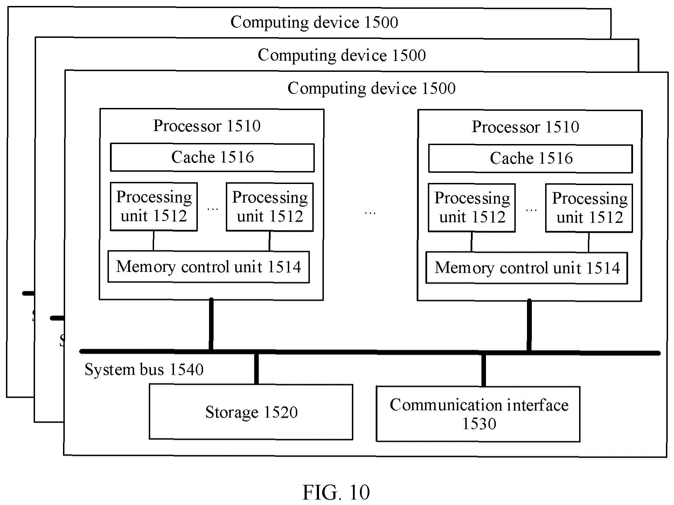

As shown in FIG. 10, the computing device cluster includes at least one computing device 1500. Storages 1520 of one or more computing devices 1500 in the computing device cluster may store same instructions used to perform the foregoing method.

In some possible implementations, the storages 1520 in the one or more computing devices 1500 in the computing device cluster may alternatively store some instructions used to perform the foregoing method separately. In other words, a combination of the one or more computing devices 1500 may jointly execute the instructions of the foregoing method.

It should be noted that storages 1520 in different computing devices 1500 in the computing device cluster may store different instructions respectively used to perform some functions of the foregoing apparatus. In other words, the instructions stored in the storages 1520 in different computing devices 1500 may implement functions of one or more modules in the foregoing apparatus.

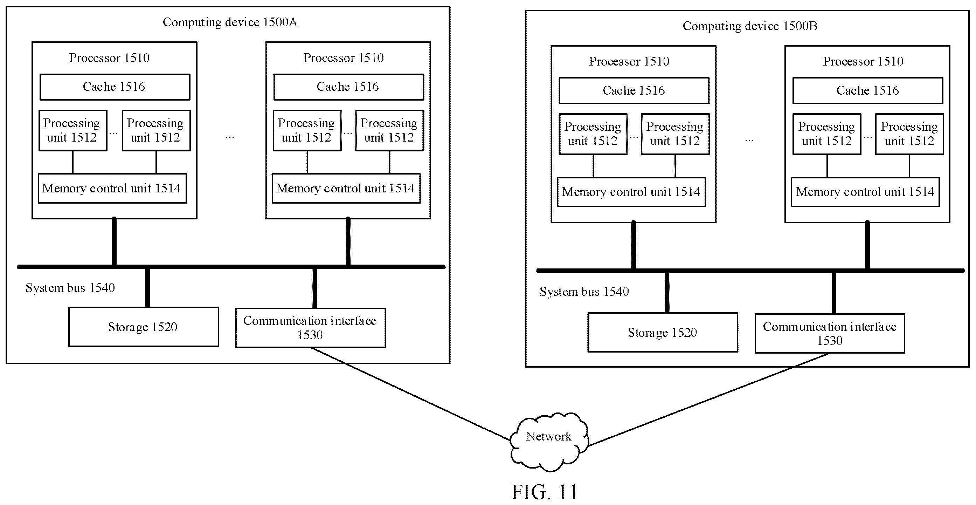

In some possible implementations, the one or more computing devices in the computing device cluster may be connected through a network. The network may be a wide area network, a local area network, or the like. FIG. 11 shows a possible implementation. As shown in FIG. 11, two computing devices 1500A and 1500B are connected through the network. Specifically, each computing device is connected to the network through a communication interface in the computing device.

It should be understood that functions of the computing device 1500A shown in FIG. 11 may alternatively be implemented by a plurality of computing devices 1500. Similarly, functions of the computing device 1500B may alternatively be implemented by a plurality of computing devices 1500.

In this embodiment, a computer program product including instructions is further provided. The computer program product may be software or a program product that includes the instructions and that can run on a computing device or that can be stored in any usable medium. When the computer program product runs on a computing device, the computing device is enabled to perform the method provided above, or the computing device is enabled to implement functions of the apparatus provided above.

In this embodiment, a computer program product including instructions is further provided. The computer program product may be software or a program product that includes the instructions and that can run on a computing device cluster or that can be stored in any usable medium. When the computer program product is run by the computing device cluster, the computing device cluster is enabled to perform the method provided above, or the computing device cluster is enabled to implement functions of the apparatus provided above.

In this embodiment, a computer-readable storage medium is further provided. The computer-readable storage medium may be any usable medium that can be stored by a computing device, or a data storage device such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. When the instructions in the computer-readable storage medium are executed on the computing device, the computing device is enabled to perform the method provided above.

In this embodiment, a computer-readable storage medium is further provided. The computer-readable storage medium may be any usable medium that can be stored by a computing device, or a data storage device such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. When the instructions in the computer-readable storage medium are executed by a computing device cluster, the computing device cluster is enabled to perform the method provided above.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data storage method, wherein a cloud database system comprises a primary database node and one or more secondary database nodes, a cloud computing platform deploys the cloud database system in a cloud computing resource managed by the cloud computing platform, and the cloud computing platform deploys a cloud storage service in the cloud computing resource; and the method comprises:
receiving, by a first node, a plurality of access requests for accessing a database, wherein the first node is the primary database node or a secondary database node of the cloud database system;
in a process in which the first node processes the plurality of access requests, locally storing or caching hot data in the first node; and
in the process in which the first node processes the plurality of access requests, migrating cold data to the cloud storage service, and locally storing or caching metadata of the cold data in the first node, wherein
the hot data and the cold data are different data tables in the database, or the hot data and the cold data are different table partitions of the data table; and
the hot data and the cold data are determined based on either or both of a quantity of times and a data amount of accessing a table partition of a data table; or the hot data and the cold data are determined based on either or both of a quantity of times and a data amount of accessing the data table.

2. The method according to claim 1, wherein the method further comprises:
in the process in which the first node processes the plurality of access requests, migrating warm data to the cloud storage service, and locally storing or caching metadata of the warm data in the first node, wherein
the hot data, the warm data, and the cold data are different data tables in the database, or the hot data, the warm data, and the cold data are different table partitions of the data table; and
the hot data, the warm data, and the cold data are determined based on either or both of a quantity of times and a data amount of accessing a table partition of a data table; or the hot data, the warm data, and the cold data are determined based on either or both of a quantity of times and a data amount of accessing the data table.

3. The method according to claim 1, wherein the first node is the primary database node of the cloud database system, and the method further comprises:
in the process of processing the plurality of access requests, migrating warm data to the cloud storage service, and locally storing or caching the warm data in the first node, wherein metadata of the warm data is locally stored by the one or more secondary database nodes comprised in the cloud database system.

4. The method according to any one of claims 1 to 3, wherein the method further comprises:
maintaining, by the first node, a first table, wherein the first table is used to record storage statuses of the hot data, the cold data, and the warm data.

5. The method according to any one of claims 1 to 4, wherein the plurality of access requests comprise a write request, and the write request comprises to-be-written data, and the method further comprises:
caching, by the first node based on that the write request is a write operation performed on the cold data stored in the cloud storage service, the to-be-written data in local storage of the first node in a form of incremental data.

6. The method according to any one of claims 2 to 4, wherein the plurality of access requests comprise a write request, and the write request comprises to-be-written data, and the method further comprises:
caching, by the first node based on that the write request is a write operation performed on the warm data stored in the cloud storage service, the to-be-written data in local storage of the first node in a form of incremental data.

7. The method according to claim 5 or 6, wherein the method further comprises:
combining, by the first node, the incremental data in the local storage of the first node with the cold data or the warm data stored in the cloud storage service, and migrating combined data to the cloud storage service.

8. The method according to any one of claims 4 to 7, wherein the first table is further used to record existence of the incremental data.

9. A data storage apparatus, wherein a cloud database system comprises a primary database node and one or more secondary database nodes, a cloud computing platform deploys the cloud database system in a cloud computing resource managed by the cloud computing platform, the cloud computing platform deploys a cloud storage service in the cloud computing resource, the apparatus is used in a first node, and the first node is the primary database node or a secondary database node of the cloud database system; and the apparatus comprises:
a receiving module, configured to receive a plurality of access requests for accessing a database, wherein the first node is the primary database node or a secondary database node of the cloud database system;
a cache module, configured to: in a process of processing the plurality of access requests, locally store or cache hot data in the first node; and
a migration module, configured to: in the process of processing the plurality of access requests, migrate cold data to the cloud storage service, and locally store or cache metadata of the cold data in the first node, wherein
the hot data and the cold data are different data tables in the database, or the hot data and the cold data are different table partitions of the data table; and
the hot data, and the cold data are determined based on either or both of a quantity of times and a data amount of accessing a table partition of a data table; or the hot data, and the cold data are determined based on either or both of a quantity of times and a data amount of accessing the data table.

10. The apparatus according to claim 9, wherein
the migration module is further configured to: in the process of processing the plurality of access requests, migrate warm data to the cloud storage service, and locally store or cache metadata of the warm data in the first node, wherein
the hot data, the warm data, and the cold data are different data tables in the database, or the hot data, the warm data, and the cold data are different table partitions of the data table; and
the hot data, the warm data, and the cold data are determined based on either or both of a quantity of times and a data amount of accessing a table partition of a data table; or the hot data, the warm data, and the cold data are determined based on either or both of a quantity of times and a data amount of accessing the data table.

11. The apparatus according to claim 9, wherein the first node is the primary database node of the cloud database system; and
the migration module is further configured to: in the process of processing the plurality of access requests, migrate warm data to the cloud storage service, and locally store or cache the warm data in the first node, wherein metadata of the warm data is locally stored by the one or more secondary database nodes comprised in the cloud database system.

12. The apparatus according to any one of claims 9 to 11, wherein the apparatus further comprises:
a maintenance module, configured to maintain a first table, wherein the first table is used to record storage statuses of the hot data, the cold data, and the warm data.

13. The apparatus according to any one of claims 9 to 12, wherein the plurality of access requests comprise a write request, and the write request comprises to-be-written data; and
the cache module is further configured to: perform, based on the write request, a write operation on the cold data stored in the cloud storage service, and cache the to-be-written data in local storage of the first node in a form of incremental data.

14. The apparatus according to any one of claims 10 to 12, wherein the plurality of access requests comprise a write request, and the write request comprises to-be-written data; and
the cache module is further configured to: cache, based on that the write request is a write operation performed on the cold data stored in the cloud storage service, the to-be-written data in local storage of the first node in a form of incremental data.

15. The apparatus according to claim 13 or 14, wherein the apparatus further comprises:
a combination module, configured to combine the incremental data in the local storage of the first node with the cold data or the warm data stored in the cloud storage service, wherein
the migration module is further configured to migrate combined data to the cloud storage service.

16. The apparatus according to claim 12 or 15, wherein the first table is further used to record existence of the incremental data.

17. A computing device, comprising a processor and a storage, wherein the processor is configured to execute instructions stored in the storage, to enable the computing device to perform the method according to any one of claims 1 to 8.

18. A computing device cluster, comprising at least one computing device, wherein each computing device comprises a processor and a storage; and
the processor of the at least one computing device is configured to execute instructions stored in the storage of the at least one computing device, to enable the computing device cluster to perform the method according to any one of claims 1 to 8.

19. A computer program product comprising instructions, wherein when the instructions are run by a computing device, the computing device is enabled to perform the method according to any one of claims 1 to 8.

20. A computer program product comprising instructions, wherein when the instructions are run by a computing device cluster, the computing device cluster is enabled to perform the method according to any one of claims 1 to 8.

21. A computer-readable storage medium, comprising computer program instructions, wherein when the computer program instructions are executed by a computing device, the computing device performs the method according to any one of claims 1 to 8.

22. A computer-readable storage medium, comprising computer program instructions, wherein when the computer program instructions are executed by a computing device cluster, the computing device cluster performs the method according to any one of claims 1 to 8.
